Europäisches Patentamt

(19) European Patent Office  (11) Publication number: **0 041 967**

Office européen des brevets  **B1**

(12) **EUROPEAN PATENT SPECIFICATION**

(45) Date of publication of patent specification: **20.02.85**  (51) Int. Cl.⁴: **G 01 G 3/16, G 01 L 1/10**

(21) Application number: **80902296.5**

(22) Date of filing:.**08.12.80**

(86) International application number:
**PCT/GB80/00212**

(87) International publication number:
**WO 81/01742 25.06.81 Gazette 81/15**

(54) **IMPROVEMENTS RELATING TO WEIGHING DEVICES.**

(30) Priority: **08.12.79 GB 7942430**
**15.04.80 GB 8012319**

(43) Date of publication of application:
**23.12.81 Bulletin 81/51**

(45) Publication of the grant of the patent:
**20.02.85 Bulletin 85/08**

(84) Designated Contracting States:
**DE FR GB**

(56) References cited:
**CH-A- 459 603**
**CH-A- 520 326**
**DE-A-1 774 739**
**GB-A-1 106 907**
**US-A-4 158 395**

(73) Proprietor: **NATIONAL RESEARCH**
**DEVELOPMENT CORPORATION**
**101 Newington Causeway**
**London SE1 6BU (GB)**

(72) Inventor: **FRAVAL, Robert Hanafi**
**Ditton Park Cottage Ditton Park Road**
**Langley, Berkshire (GB)**
Inventor: **OAKFORD, Howerd Paul**
**42, Dawson Road**
**Byfleet Surrey (GB)**

(74) Representative: **Lainé, Simon James et al**
**Wynne-Jones, Lainé & James 22, Rodney Road**
**Cheltenham Gloucestershire. GL50 1JJ (GB)**

Courier Press, Leamington Spa, England.

## Description

This invention relates to weighing devices and methods of weighing. It is intended primarily for use in a moisture meter where it is important to have an accurately weighed sample. The proposed device allows this to be done in a receptacle that can form part of the meter itself.

It is also desirable to have a weighing device that is not dependent on counterbalancing weights or one where its orientation is important, as in most scales.

One answer to that problem is to measure the frequency of an oscillating mass, since that frequency will be directly related to the mass. However, the accuracy of such a method can be affected by the damping which is necessary to ensure stability and by the transmission of oscillations to the supporting structure. One proposal to make this technique more reliable has been described in U.S. Patent US—A— 4 158 395.

In that patent, a measuring platform for an unknown mass is suspended by a plurality of flexible struts, arranged so that the platform has only one degree of freedom. The struts are anchored to an intermediate mass which is itself suspended by struts allowing only one degree of freedom. The intermediate mass is heavy relative to the platform and its load whose weight is to be determined, and it therefore oscillates at a frequency considerably less than that of the platform, acting as a low pass mechanical filter reducing the energy flow from the system.

However, the need to have a very much heavier intermediate mass automatically introduces undesirable weight and size. Also, the system requires a soft suspension, but with a heavy mass there are support problems and biasing springs have to be introduced. These tend to increase the frequency of oscillation of the intermediate mass and provide another path for loss of energy from the system. The present invention has a different approach which aims to overcome these drawbacks.

According to one aspect of the present invention there is provided a device for weighing a load of unknown mass comprising a first body of known mass, a second body of known mass adapted to carry a load of unknown mass, a base, a suspension system supporting the bodies on the base for substantially unimpeded oscillatory motion in one mode over at least a limited distance, and means for determining the resonant frequency of natural oscillation and hence the mass of the load, characterised in that the suspension system comprises matching spring means acting between the base and the respective bodies, and further spring means connecting said bodies so that their natural oscillations are in said one mode and mutually opposed, whereby opposite forces are transmitted *via* the spring suspension means to the base and the bodies are substantially isolated from the environment.

According to another aspect of the present invention there is provided a method of weighing wherein a load of unknown mass is oscillated, the method comprising

i) supporting first and second bodies of known mass on a base by suspension means which allow said bodies substantially unimpeded oscillatory motion in one mode over at least a limited distance,

ii) leading said second body with a load of unknown mass,

iii) causing the body and its suspension means to oscillate in said one mode, and

iv) determining the resonant frequency of such oscillations, characterised by

v) providing the suspension means with matching spring means acting between the base and the respective bodies and further spring means connecting said bodies so that their natural oscillations are in said one mode and mutually opposed, whereby opposite forces are transmitted by the spring supporting means to the base and the bodies are substantially isolated from the environment, and

vi) determining the resonant frequencies of said oscillations over a range of known ladings of said second body, whereby the resonant frequency of step iv) can be related to a lading and indicate the mass of the load.

The mutually opposed motion of the two bodies will be ensured by arranging that they are in the same mass range when the second one is laden.

By natural oscillations is meant the usual movement of a spring mounted body, making most use of the spring characteristics. For example, with a coil spring this movement is longitudinal of the coil, although oscillations are possible transversely of this direction, by means of the spring flexing.

Conveniently, the vibrations will be initially generated by electro-magnetic means, such as a coil mounted on either body and co-operating with magnetised poles on the other body of the assembly. Pulses applied to this coil at a frequency approximating to the expected resonant frequency generate the oscillations, and when the pulses are stopped substantially free harmonic motion exists. The coil can be used in detecting the amplitude during intervals between pulses, and when a given amplitude is achieved the pulses may be stopped. This is advisable since frequency is affected by amplitude. Alternatively, the pulses may be stopped after a predetermined number. The coil can subsequently be used to detect the natural frequency of oscillation, which is a direct measure of the mass of the sample since the other masses and the values of the spring constants are known. A spring constant is a function of temperature, and a corrective factor can be introduced to allow for this, for example, in the electronic processing of the detected oscillations, or use could be made of spring material with a very low temperature constant.

For a better understanding of the invention some examples will now be described, by way of example, with reference to the accompanying drawings, in which:

Figure 1 is a diagrammatic sectional elevation of a weighing device,

Figure 2 is a diagrammatic sectional elevation of a modified weighing device,

Figure 3 is a diagram of a control and read-out circuit associated with such weighing devices,

Figure 4 is a block diagram illustrating a microprocessor program,

Figure 5 is a side view of a practical example of a weighing device,

Figure 6 is a section on the line VI—VI of Figure 5, and

Figure 7 is a diagrammatic plan view showing the spring arrangements of the device.

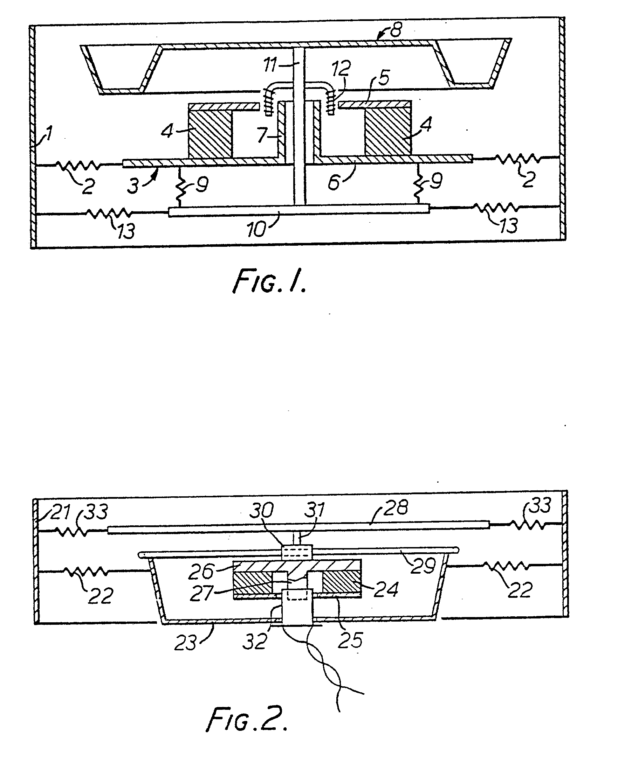

The device of Figure 1 has a fixed outer casing 1 within which is suspended, by springs 2 attached to the wall of the casing, a structure 3 of known mass. The springs 2 are illustrative only of any means which can decouple the structure 3 from the casing 1 and its environment. In order to achieve accuracy, the structure 3 should not be in firm contact with its support, since the latter could then affect the resonant frequency of the system to be described.

The structure 3 has permanent magnets 4 (or a complete ring magnet) with annular pole pieces 5 and 6, the pole piece 6 being a disc of magnetically permeable material with a central spigot 7 which forms an annular gap with the inner periphery of the pole piece 5. A receptacle 8 for a sample to be weighed is coupled to the structure 3 by springs 9. These suspend a circular plate 10 from whose centre a column 11 extends upwardly through the spigot 7 to carry the receptacle 8. A coil 12 is also carried by this column 11 and is located in the gap between the pole piece 5 and spigot 7. There is a further spring connection between the plate 10 and the casing 1, these springs 13 matching the springs 2.

The sample to be weighed is put into an annular trough 14 around the periphery of receptacle 8, and when levelled off, completely filling the trough, the assembly 8, 10, 11, 12 will be in the same mass range as the structure 3. The sample distribution will keep the receptacle balanced with the column 11 upright, and since the filled trough represents a known volume, once the weight is determined the density can readily be calculated. The receptable assembly 8, 10, 11, 12 is of known mass and the springs 9 are of known rate so that from the resonant frequency of vertical oscillations the mass of any charge in the receptacle can be calculated.

For a weighing operation the receptacle is charged and pulses are fed to the coil 12. This generates vertical oscillatory motion of both the receptacle 8 and the structure 3, the amplitudes of oscillation being equal when the masses of the magnet structure and the receptacle assembly are the same. When this motion has stabilised or reached a given amplitude, the pulses are cut off, and the system achieves free harmonic motion. The springs 2 and 13 isolate the resonant system from the casing, their vertical components of forces effectively cancelling out since their respective moving structures, which are in the same mass range, are always travelling in opposite directions with matching motions. The resultant frequency can be determined from signals induced in the coil 12. It depends mainly on the rate of springs 9 and the relative mass of the structure 3 and the filled receptacle 8, but also to some extent on the amplitude of the oscillations. For consistency and accuracy it is therefore desirable to take the frequency measurement at a defined amplitude, which can be determined by mechanical, electrical, electromechanical or optical methods. A particular one will be described later.

Different weights in the receptacle give different frequencies, and this relationship can be pre-calculated and/or determined by tests, and then calibrated for immediate read-out. The free motion frequency achieved is most conveniently detected by using the coil 12 which is moving within a magnetic field. Circuitry for achieving this will be described below.

As mentioned above, temperature affects the springs, and this can be allowed for electronically or by suitable selection of spring material.

A somewhat different device, but embodying the same principles, is shown in Figure 2. A casing 21 suspends by means of springs 22 a structure 23. Within this is housed a magnet assembly comprising an annular magnet 24 and pole pieces 25 and 26, the latter being a disc with a downwardly projecting central stem 27 forming an annular gap with the inner periphery of a washer-like pole piece 25. A platform 28 is supported above the structure 23 by means of an S-shaped spring 29 spanning the structure and passing through a boss 30 centrally secured to the upper side of the pole piece 26. The connection between platform 28 and boss 30 is by a short column 31. A coil 32 mounted centrally of the base of the structure 23 projects upwardly into the gap between pole piece 25 and stem 27. Springs 33 couple the platform 28 to the casing 21, the springs 22 and 33 being equivalent to the springs 2 and 13 of Figure 1.

In Figure 1 the coil is part of the variable mass, while in Figure 2 it is part of the known mass. The receptacle in Figure 2 is shown as a flat platform, and for many weighing purposes this is quite adequate. It will be understood that hollow receptacles could be used instead. In both examples, instead of a coil/magent system, the oscillatory drive could be generated by an electro-magnet/magnet system.

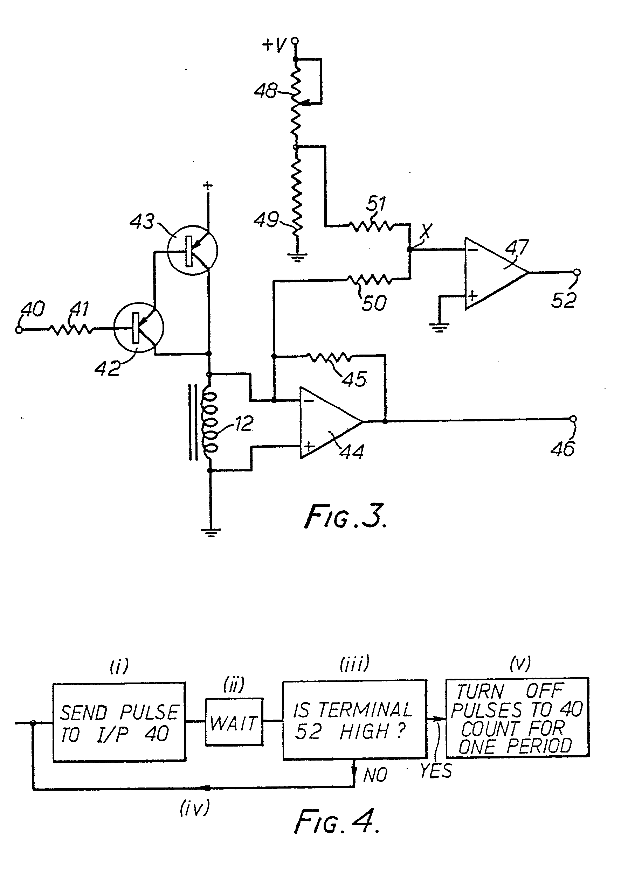

Figure 3 shows a circuit for interfacing either of the weighing devices described with a microprocessor (not shown), for driving the initial oscillations and for obtaining usable pulses from the coil, here referenced 12 as in Figure 1.

The microprocessor will provide negative going pulses at approximately the expected natural resonant frequency at input terminal 40. These pass through resistor 41 to a Darlington pair of PNP transistors 42, 43 which are in circuit across the supply voltage with the coil 12. With terminal 40 high (the off state) the transistors 42, 43 are switched off, but each pulse turns them on, generating a positive going pulse on the coil 12, and hence movement of the weighing device.

The coil 12 is connected to a first operational amplifier 44, which forms a high gain squaring circuit, converting the low amplitude sine wave signal from the coil into a square wave of the same period. Feedback resistor 45 limits the gain and increases the slew rate. The output of the amplifier passes to a monostable (not shown as it has no material effect on the operation of the circuit) and thence to a terminal 46 at an input of the microprocessor.

The coil 12 is also connected to a second operational amplifier 47, the coil output being summed at point X with that of a small reference voltage from a divider chain. This is formed by potentiometer 48 and resistor 49, and the outputs are applied through respective resistors 50, 51 to the negative input of the amplifier. The positive input is grounded. The voltage V applied to the divider chain is stabilised and the resistance values are R48 and R49.

When the voltage from coil 12 falls below

$$\frac{-V \cdot R48}{R48 + R49}$$

point X goes below ground potential and so the output of amplifier 47 goes high. This happens when the oscillations of the weighing device have reached a given amplitude the level of which is set by potentiometer 48. This amplifier output is to a terminal 52 at another input of the microprocessor. Of course, when input 40 is low, the coil voltage is high and blocks any high output from amplifier 47.

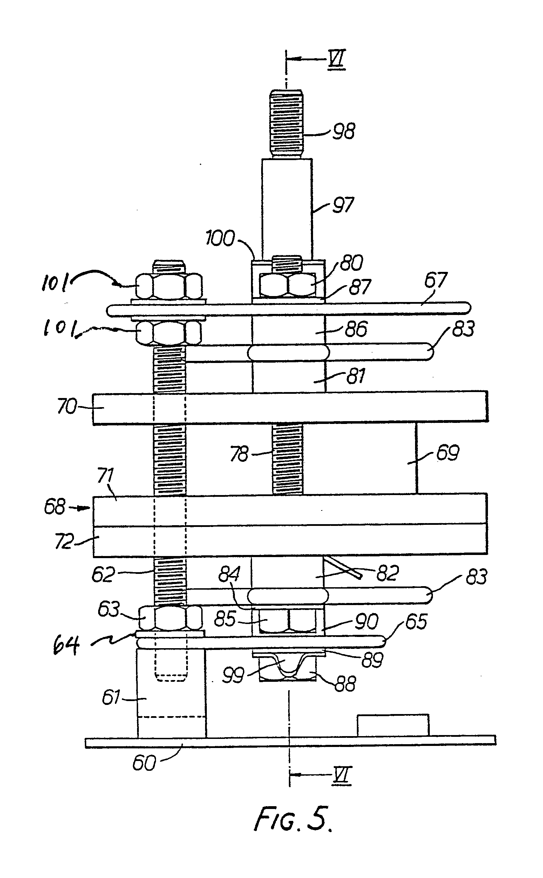

This circuit operates in conjunction with the weighing device and the microprocessor (MCP) program, which performs several functions in sequence as follows, and as illustrated diagrammatically in Figure 4.

(i) The MCP sends an active low pulse of length equal to approximately one third of the unloaded weighing device resonant period to input 40. An oscillation is started in a "forward" direction by the coil 12. A corresponding pulse appears at terminal 46, but there cannot yet be a high output at 52 as coil 12 goes positive.

(ii) The MCP then waits for a period equal to half the length of its pulse, i.e. to just before the midpoint of the cycle of oscillation when the maximum output from the return movement of the coil occurs. When the device is loaded, the oscillations will be slower and so after a time equal to (1/3+1/6) of the unloaded period the loaded device will still have to generate its peak output on the return movement.

(iii) By this time terminal 52 could be high if the oscillation is sufficient to induce a negative voltage in coil 12 which outweighs the reference voltage. The MCP now checks for this high over a brief length of time, approximately 1/8th of the unloaded resonant period, which will be sufficient even when the device is loaded since the periods will not vary to a large extent.

(iv) Whatever the amplitude reached, there will still be a pulse at terminal 46, induced by the return movement of the coil. If the required amplitude is not reached, the return to high of terminal 46 causes the MCP to return to stage (i).

(v) If the required amplitude is reached, the MCP, triggered from terminal 52, disables the drive pulse output to terminal 40 and counts up at a fixed rate for one or more periods of the weighing device as the device resonates freely, using the pulses at 46. Generally several periods will be counted and averaged, for greater resolution. Decay of amplitude, and hence a change in period, is negligible over say four periods.

The counting is carried out by the MCP which, to keep the count in the correct phase, is programmed
   (a) to loop while output 46 is low
   (b) to loop whilst counting while 46 is high
   (c) to loop whilst counting while 46 is low.
The instruction to count will occur when terminal 46 is low, during the induced pulse which sends terminal 52 high. However, this is an indeterminate point, and so the count should not commence immediately. Instead, the MCP waits until 46 goes high, counts during that phase and during the subsequent low phase and so a complete half period is ascertained. Preferably (b) and (c) are repeated to a total of eight times each so that four periods are counted.

Although the devices described have vertical oscillations, it should be understood that this is not essential and versions with horizontal or even inclined movement would be equally workable. Also it is not essential that the devices be held exactly in their intended attitude; they are tolerant of being held and operated in the hand.

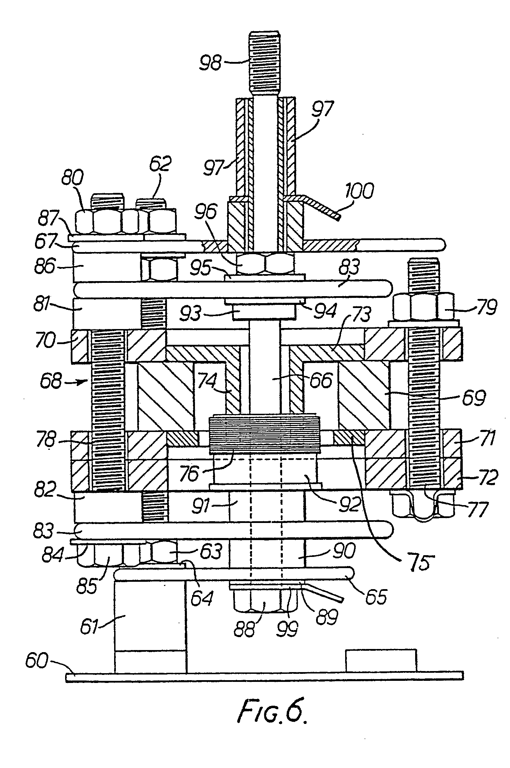

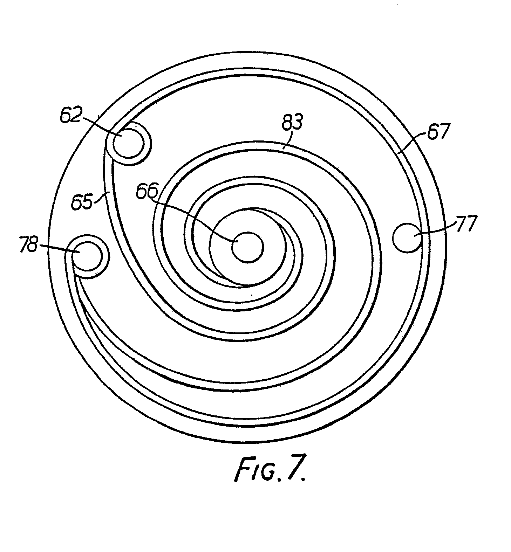

A practical example is shown in Figures 5, 6 and 7. This has a base plate 60 with a boss 61 at one side into which is screwed a vertical column 62. A nut 63 and washer 64 trap one end of a spiral spring 65 against the head of the boss 61, the other end of this spring (equivalent to 13 in Figure 1) being connected to a central spindle 66. At the top of the column 62 a double nut and washer assembly 101 trap the end of another spring 67, (equivalent to 2 in Figure 1) which is connected to a magnet assembly 68. This spring is an almost complete circular loop.

The magnet assembly comprises a magnet 69 held between upper and lower rings 70 and 71, the lower ring being backed by an auxiliary ring 72. The column 62 passes freely through apertures near the edges of these rings. The magnet has an upper pole piece 73 with a cylindrical spigot 74 freely surrounding the spindle 66 and projecting downwardly to be radially spaced from a lower pole piece 75. A coil 76 mounted on the spindle 66 is disposed in the annular gap between the pole pieces.

The magnet assembly is clamped together in the axial direction by diametrically opposite bolts 77 and 78 secured by nuts 79 and 80. The bolt 77 just serves as a clamp, but bolt 78 is longer and is additionally used for connection to various springs. Respectively above and below the rings 70 and 72 there are spacers 81 and 82 for locating the ends of spiral springs 83 (equivalent to 9 in Figure 1) coupling the magnet assembly to the central spindle 66. The lower spring 83 is clamped between a washer 84 adjacent the head 85 of the bolt 78 and the lower spacer 82, the upper spring 83 is clamped between the spacer 81 and a further spacer 86, and the spring 67 is clamped between this spacer 86 and a washer 87 below the nut 80.

At its lower end, the spindle 66 has a head provided by a nut 88, and the other end of spring 65 is clamped between a washer 89 on this nut and a spacer 90. The other end of lower spring 83 is clamped between this spacer 90 and another spacer 91. A mounting 92 for the coil 76 is above this. Further up the spindle there is a collar 93, and on this bears in ascending order a washer 94, the other end of upper spring 83 and a further washer 95, these being clamped by a nut 96. Above this, the spindle is surrounded by a sleeve assembly 97 and its exposed upper end 98 is threaded for mounting a receptacle (not shown).

Between the nut 88 and the washer 89 there is a further washer 99 with a solder tag, and a similar element 100 forms part of the sleeve assembly 97. External electrical connections are made here, and there are internal connections (not shown) via the spindle to the coil, the elements 99 and 100 being mutually insulated.

The spiral springs 83 are identical, and form a parallel linkage which ensures that the spindle assembly and magnet assembly, which they interconnect, move in parallel. The other springs 65 and 67 although perforce of different shape, have substantially the same rate and other characteristics at least for oscillations in the axial direction of the spindle.

The auxiliary ring 72 is replaceable by other rings of smaller or greater mass, or removable altogether, in order that the magnet assembly 68 should be in the same mass range as the loaded spindle assembly. It will not need changing for every weighing operation, and indeed will be virtually permanent in many cases. The sample loads will generally be known to be within a certain range, say 0—300 grams, and so the magnet assembly can be ballasted to make it match a median load of 150 grams, for example.

## Claims

1. A device for weighing a load of unknown mass comprising a first body (3; 23; 68) of known mass, a second body (8; 28; 66) of known mass adapted to carry a load of unknown mass, a base (1; 21; 60, 62), a suspension system supporting the bodies on the base for substantially unimpeded oscillatory motion in one mode over at least a limited distance, and means (12; 32; 76) for determining the resonator frequency of natural oscillation and hence the mass of the load, characterised in that the suspension system comprises matching spring means (2, 13; 22, 33; 65, 67) acting between the base and the respective bodies, and further spring means (9; 29; 83) connecting said bodies so that their natural oscillations are in said one mode and mutually opposed, whereby opposite forces are transmitted *via* the spring suspension means to the base and the bodies are substantially isolated from the environment.

2. A device as claimed in Claim 1, wherein pulse-operated electromagnetic means (7, 12; 27, 32; 74, 76) are provided for generating oscillations at a frequency approximating to the expected resonant frequency, there being means (47) for blocking the pulses prior to the determination of the resonant frequency.

3. A device as claimed in Claim 2, wherein the electromagnetic means are arranged to produce, after the pulses are blocked, signals corresponding to the subsequent natural oscillations.

4. A device as claimed in Claim 1, 2 or 3, wherein means (48, 49) are provided for determining a given amplitude of oscillations and, when this is achieved, for activating the means for determining the resonant frequency.

5. A device as claimed in Claim 4, wherein pulse-operated electromagnetic means (7, 12;

27, 32; 74, 76) are provided for generating oscillations at a frequency approximating to the expected resonant frequency, and are arranged to produce, during a fraction of the pulse cycle when a pulse is not present, an indication of the amplitude of oscillation.

6. A method of weighing wherein a load of unknown mass is oscillated, the method comprising

i) supporting first and second bodies on a base by suspension means which allow said bodies substantially unimpeded oscillatory motion in one mode over at least a limited distance,

ii) lading said second body with a load of unknown mass,

iii) causing the body and its suspension means to oscillate in said one mode, and

iv) determining the resonant frequency of such oscillations, characterised by

v) providing the suspension means with matching spring means acting between the base and the respective bodies and further spring means connecting said bodies so that their natural oscillations are in said one mode and mutually opposed, whereby opposite forces are transmitted by the spring supporting means to the base and the bodies are substantially isolated from the environment, and

vi) determining the resonant frequencies of said oscillations over a range of known ladings of said second body, whereby the resonant frequency of step iv) can be related to a lading and indicate the mass of the load.

7. A method as claimed in Claim 6, wherein the oscillations are generated electromagnetically by pulses at a frequency approximating to the expected resonant frequency, these pulses being blocked prior to said determination.

8. A method as claimed in Claim 7, wherein the pulses are applied to electromagnetic means which also serve, after the pulses are blocked, to produce signals corresponding to the subsequent natural oscillations.

9. A method as claimed in Claim 6, 7 or 8, wherein said determination of the resonant frequency is carried out at a given amplitude of oscillation.

10. A method as claimed in Claim 9, wherein initially oscillations are generated electromagnetically by pulses at a frequency approximating to the expected resonant frequency, and during the fraction of the pulse cycle that a pulse is not present the electromagnetic means serve to provide an indication of the amplitude of oscillation.

**Revendications**

1. Dispositif de pesée d'une charge de masse inconnue comprenant un premier corps (3; 23; 68) de masse connue, un second corps (6; 28; 66) de masse connue destiné à porter un charge de masse inconnue, une base (1; 21; 60, 62), un système de suspension supportant les corps sur la base pour l'exécution d'un mouvement oscillant sensiblement non entravé dans un mode sur au moins une distance limitée, et des moyens (12; 32; 76) pour déterminer la fréquence de résonance d'oscillation naturelle et par conséquent la mass de la charge, caractérisé en ce que le système de suspension comprend des moyens élastiques d'adaptation (2, 13; 22, 33; 65, 67) agissant entre la base et les corps respectifs et d'autres moyens élastiques reliant lesdits corps de façon que leurs oscillations naturelles soient dans ledit mode et mutuellement opposées, afin que des forces opposées soient transmises par l'intermédiare des moyens de suspension élastiques à la base et que les corps soient sensiblement isolés de l'environnement.

2. Dispositif comme revendiqué dans la revendications 1, dans lequel des moyens électromagnétiques actionnés par impulsions (7, 12; 27, 32; 74, 76) sont prévus pour engendrer des oscillations à une fréquence se rapprochant de la fréquence de résonance attendue, des moyens (47) étant prévus pour arrêter les impulsions avant la détermination de la fréquence de résonance.

3. Dispositif comme revendiqué dans la revendication 2, dans lequel les moyens électromagnétiques sont agencés pour produire, après l'arrêt des impulsions, des signaux correspondants aux oscillations naturelles subséquentes.

4. Dispositif comme revendiqué dans la revendication 1, 2 ou 3, dans lequel des moyens (48, 49) sont prévus pour déterminer une amplitude donnée d'oscillations, et, lorsque cela est obtenu, pour activer les moyens de détermination de la fréquence de résonance.

5. Dispositif comme revendiqué dans la revendication 4, dans lequel des moyens électromagnétiques actionnés par impulsions (7, 12; 27, 32; 74, 76) sont prévus pour produire des oscillations à une fréquence se rapprochant de la fréquence de résonance attendue, et sont agencés pour fournir, pendant une fraction du cycle d'impulsions, où une impulsion n'est pas présente, une indication de l'amplitude d'oscillations.

6. Procédé de pesée dans lequel une charge de masse inconnue est mise en oscillation, le procédé consistant à:

i) supporter un premier et un second corps sur une base par des moyens de suspension qui permettant auxdits corps un mouvement oscillant sensiblement non entravé dans un mode sur au moins une distance limitée,

ii) charger ledit second corps avec une charge de mass inconnue,

iii) faire osciller le corps et ces moyens de suspension dans ledit mode, et

iv) déterminer la fréquence de résonance desdites oscillations, procédé caractérisé en ce que,

v) on munit les moyens de suspension de moyens élastiques d'adaptation agissant entre la base et les corps respectifs et d'autres moyens élastiques reliant lesdits corps de façon que leurs oscillations naturelles soient dans ledit mode et mutuellement opposées, afin que des forces opposées soient transmises par les moyens porteurs élastiques à la base et que ces corps soient sensiblement isolés de l'environnement,

vi) on détermine les frequences de résonance desdites oscillations dans une gamme de charges connues dudit second corps, de façon à obtenir une relation entre la fréquence de résonance obtenue dans l'étape iv) et une opération de chargement et obtenir une indication de la masse de la charge.

7. Un procédé comme revendiqué dans la revendication 6, dans lequel les oscillations sont produites électromagnétiquement par des impulsions à une fréquence se rapprochant de la fréquence de résonance attendue, ces impulsions étant arrêtées avant ladite détermination.

8. Procédé comme revendiqué dans la revendication 7, dans lequel les impulsions sont appliquées à des moyens électromagnétiques, qui servent également, après l'arrêt des impulsions, à produire des signaux correspondant aux oscillations naturelles subséquentes.

9. Procédé comme revendiqué dans la revendication 6, 7 ou 8, dans lequel ladite détermination de la fréquence de résonance est effectuée à une amplitude d'oscillation donnée.

10. Procédé comme revendiqué dans la revendication 9, dans lequel des oscillations sont initialement produites électromagnétiquement par des impulsions à une fréquence se rapprochant de la fréquence de résonance attendue et, pendant la fraction du cycle d'impulsions où une impulsion n'est pas présente, les moyens électromagnétiques servent à fournir une indication de l'amplitude d'oscillation.

**Patentansprüche**

1. Gerät zum Wiegen einer Last unbekannter Mass mit einem ersten Körper (3; 23; 68) bekannter Masse, einem zweiten Körper (8; 28; 66) bekannter Masse, der so ausgebildet ist, daß er eine Last unbekannter Masse trägt, einer Basis (1; 21; 60, 62), einem Aufhängungssystem, welches die Körper auf der Basis für eine im wesentlichen ungehinderte Schwingbewegung in einer Schwingungsart über wenigstens eine begrenzte Entfernung lagert, und Einrichtungen (12; 32; 76), die die Resonanzfrequenz der Eigenschwingung und damit die Masse der Last bestimmen, dadurch gekennzeichnet, daß das Aufhängungssystem aufeinander abgestimmte Federausbildungen (2, 13; 22, 33; 65, 67) umfaßt, die zwischen der Basis und den jeweiligen Körpern wirken und weitere Federausbildungen (9; 29; 83) aufweist, welche diese Körper verbinden, so daß ihre Eigenschwingungen in dieser einen Schwingungsart und einander entgegengesetzt auftreten, derart, daß entgegengerichtete Kräfte über die Aufhängungseinrichtung auf die Basis übertragen werden und daß die Körper im wesentlichen gegen die Umgebung isoliert sind.

2. Gerät nach Anspruch 1, dadurch gekennzeichnet, daß impulsbetätigte elektromagnetische Einrichtungen (7, 12; 27, 32; 74, 76) vorgesehen sind, um Schwingungen bei einer Frequenz, die sich der erwarteten Resonanzfrequenz nähert, zu erzeugen, wobei Einrichtungen (47) vorgesehen sind, um die Impulse vor der Bestimmung der Resonanzfrequenz zu sperren.

3. Gerät nach Anspruch 2, dadurch gekennzeichnet, daß die elektromagnetischen Einrichtungen angeordnet sind, um, nachdem die Impulse gesperrt sind, Signals zu erzeugen, die den nachfolgenden Eigenschwingungen entsprechen.

4. Gerät nach Anspruch 1, 2 oder 3, dadurch gekennzeichnet, daß Einrichtungen (48, 49) vorgesehen sind, um eine gegebene Oszillationsamplitude zu bestimmen und, wenn dies erreicht ist, die Einrichtungen zu aktivieren, um die Resonanzfrequenz zu bestimmen.

5. Gerät nach Anspruch 4, dadurch gekennzeichnet, daß die impulsbetätigten elektromagnetischen Einrichtungen (7, 12; 27, 32; 74, 76) vorgesehen sind, um Schwingungen bei einer Frequenz, die sich der erwarteten Resonanzfrequenz nähert, zu erzeugen und angeordnet sind, um während eines Bruchteils des Impulszyklus, wenn ein Impuls nicht vorhanden ist, eine Anzeige für die Schwingungsamplitude zu erzeugen.

6. Wiegeverfahren, bei dem eine Last unbekannter Masse in Schwingungen versetzt wird, wobei

i) erste und zweite Körper auf einer Basis durch Aufhängeausbildungen gelagert werden, die diesen Körpern eine im wesentlichen ungehinderte Schwingbewegung in einer Schwingungsart über wenigstens eine begrenzte Entfernung ermöglichen,

ii) dieser zweite Körper mit einer Last unbekannter Masse belastet wird,

iii) dieser Körper und seine Aufhängungsausbildungen veranlaßt werden, in dieser einen Schwingungsart zu schwingen und

iv) die Resonanzfrequenz dieser Schwingungen bestimmt wird, dadurch gekennzeichnet, daß

v) die Aufhängeausbildungen mit aneinander angepaßten Federeinrichtungen versehen werden, die zwischen der Basis und den jeweiligen Körpern zur Wirkung kommen und weiterhin Federeinrichtungen vorgesehen sind, welche diese Körper so verbinden, daß ihre Eigenschwingungen in dieser einen Schwingungsart sich befinden und einander entgegengesetzt sind, wodurch entgegengesetzte Kräfte durch die Federlagereinrichtungen auf die Basis übertragen werden und die Körper gegen die Umgebung im wesentlichen isoliert werden, und

vi) die Resonanzfrequenz dieser Schwingungen über einen Bereich bekannter Belastungen dieses zweiten Körpers bestimmt werden, wodurch die Resonanzfrequenz der Stufe iv) in Beziehung zu einer Belastung gesetzt und die Masse der Last angegeben werden kann.

7. Verfahren nach Anspruch 6, dadurch gekennzeichnet, daß die Schwingungen elektromagnetisch durch Impulse bei einer Frequenz erzeugt werden, welche sich der erwarteten Resonanzfrequenz nähert, wobei diese Impulse vor dieser Bestimmung gesperrt werden.

8. Verfahren nach Anspruch 7, dadurch gekennzeichnet, daß die Impulse an elektromagnetische Einrichtungen gelegt werden, die auch, nachdem die Impulse gesperrt sind, dazu dienen, Signale entsprechend den nachfolgenden Eigenschwingungen zu erzeugen.

9. Verfahren nach Anspruch 6, 7 oder 8, dadurch gekennzeichnet, daß die Bestimmung der Resonanzfrequenz bei einer gegebenen Schwingungsamplitude durchgeführt wird.

10. Verfahren nach Anspruch 9, dadurch gekennzeichnet, daß zunächst Schwingungen elektromagnetisch durch Impulse bei einer Frequenz erzeugt werden, welche sich der erwarteten Resonanzfrequenz nähert und die während des Bruchteils des Impulszyklus, währenddessen ein Impuls nicht vorhanden ist und elektromagnetischen Einrichtungen dazu dienen, eine Anzeige der Schwingungsamplitude zu liefern.

FIG. 1.

FIG. 2.

FIG.3.

FIG.4.

FIG. 5.

FIG.6.

FIG. 7.